# EUROPÄISCHE PATENTSCHRIFT

(11) **EP 1 369 754 B1**
(45) Veröffentlichungstag und Bekanntmachung des Hinweises auf die Patenterteilung: **16.07.2008**
(21) Anmeldenummer: 03008405.7
(22) Anmeldetag: 11.04.2003
(51) Int. Cl.: G05B 19/408

(54) **Verfahren zur seriellen Datenübertragung zwischen einer Positionsmesseinrichtung und einer Verarbeitungseinheit**
Method for the serial transfer of data between a position measuring device and a processing unit
Procédé de transfert de données en série entre un capteur de position et une unité de traitement

(30) Priorität: 04.06.2002 DE 10224627
(43) Veröffentlichungstag der Anmeldung: 10.12.2003
(73) Patentinhaber: Dr. Johannes Heidenhain GmbH, 83292 Traunreut (DE)
(72) Erfinder: Bratzdrum, Erwin, 83359 Hallabruck (DE)

(56) Entgegenhaltungen:
- EP-A2- 0 534 690
- DE-A1- 10 030 357
- DE-A1- 10 030 358
- US-A- 5 689 161
- US-A1- 2002 045 956
- SONG Y Q ET AL: "Adding local scheduling mechanisms to FDDI for time critical communications" INDUSTRIAL ELECTRONICS, CONTROL AND INSTRUMENTATION, 1994. IECON '94., 20TH INTERNATIONAL CONFERENCE ON BOLOGNA, ITALY 5-9 SEPT. 1994, NEW YORK, NY, USA,IEEE, Bd. 2, 5. September 1994 (1994-09-05), Seiten 1190-1195, XP010137498 ISBN: 0-7803-1328-3
- KIEL E ET AL: "EINCHIP-CONTROLLER FUER DAS SERCOS-INTERFACE. \INTEGRIERTE ECHTZEIT-KOMMUNIKATION FUER DIE MSR-TECHNIK" ELEKTRONIK, WEKA FACHZEITSCHRIFTENVERLAG, POING, DE, Bd. 41, Nr. 6, 17. März 1992 (1992-03-17), Seiten 50,55-59, XP000287921 ISSN: 0013-5658

## Beschreibung

Die vorliegende Erfindung betrifft ein Verfahren zur seriellen Datenübertragung zwischen einer Positionsmesseinrichtung und einer Verarbeitungseinheit.

Aus der DE 100 30 358 A1 der Anmelderin ist ein Verfahren sowie eine Vorrichtung zur seriellen Datenübertragung zwischen einer Positionsmesseinrichtung und einer Verarbeitungseinheit bekannt, welches z.B. eine hochdynamische Regelung von Antriebseinheiten auf Grundlage der generierten Positionsdaten der Positionsmesseinrichtung ermöglicht. Offenbart ist in dieser Druckschrift im wesentlichen eine geeignete Protokollstruktur einer entsprechend ausgelegten digitalen Schnittstelle, über die eine schnelle, interrupt-fähige Punkt-zu-Punkt-Verbindung zwischen der Verarbeitungseinheit und der Positionsmesseinrichtung ermöglicht wird. In Bezug auf die konkrete physikalische Ausgestaltung einer derartigen Schnittstelle wird lediglich ausgeführt, dass die vorgeschlagene Protokollstruktur zur seriellen Datenübertragung auf Basis verschiedenster bekannter Schnittstellenkonzepte realisierbar ist. Details zur konkreten Ausgestaltung der eigentlichen Schnittstellen-Physik finden sich in der Druckschrift jedoch nicht.

Das Gleiche gilt für die DE 100 30 357 A1 der Anmelderin, in der i.w. die Lösung eines resultierenden Problems beim Einsatz der Protokollstruktur aus der genannten DE 100 30 358 A1 vorgeschlagen wird, nämlich die Eliminierung einer eventuell vorliegenden zeitlichen Unbestimmtheit bezüglich Positions-Anforderungsbefehlen bzw. Einspeicherimpulsen, die sich aus der Interrupt-Fähigkeit der Schnittstelle ergibt. Eine derartige Unsicherheit wäre insbesondere hinsichtlich der Echtzeit-Fähigkeit der Schnittstelle nachteilig, an die hohe Anforderungen in Bezug auf ein möglichst zeit-determiniertes Erzeugen respektive Einspeichern von Positionsdaten auf Seiten der Positionsmesseinrichtung resultieren.

Soll das aus der DE 100 30 358 A1 bekannte Prinzip zur seriellen Datenübertragung in Verbindung mit einer sog. Ethernet-Physik eingesetzt werden, so ergeben sich weitere Probleme aufgrund der geforderten Echtzeit-Fähigkeit der Schnittstelle. Wie bereits erwähnt, muss im Fall hochdynamischer Regelungen in erster Linie gewährleistet sein, dass ein möglichst deterministisches Erfassen bzw. Einspeichern von Positionsdaten auf Seiten der Positionsmesseinrichtung erfolgt, unabhängig vom Zeitpunkt, wann auf Seiten der Verarbeitungseinheit ein entsprechender Positions-Anforderungsbefehl auftritt. Eventuelle zeitliche Unsicherheiten bzgl. des Erfassungs- bzw. Einspeicherzeitpunktes der Positionsdaten wirken sich nachteilig auf die resultierende Regelungsgüte aus. Ohne zusätzliche weitere Maßnahmen ist beim Einsatz einer Ethernet-Physik und der grundsätzlichen Interrupt-Fähigkeit der Schnittstelle die Echtzeitfähigkeit nicht gewährleistet.

Aufgabe der vorliegenden Erfindung ist es daher, ein Verfahren zur interruptfähigen, seriellen Datenübertragung zwischen einer Positionsmesseinrichtung und einer Verarbeitungseinheit anzugeben, wobei insbesondere im Fall der Verwendung einer Ethernet-Physik sichergestellt ist, dass eine Erfassung von Positionsdaten in der Positionsmesseinrichtung stets zu definierten Zeiten und mit einer möglichst geringen zeitlichen Ungenauigkeit erfolgt.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Erfindungsgemäß ist nunmehr vorgesehen, im Fall des Auftretens eines Positions-Anforderungsbefehles während einer Leerlaufphase, in der keine Daten von der Verarbeitungseinheit an die Positionsmesseinrichtung übertragen werden, nach Beendigung der Leerlaufphase den Positions-Anforderungsbefehl zusammen mit einer ersten Verzögerungsinformation an die Positionsmesseinrichtung zu übertragen. Die erste Verzögerungsinformation ist auf Seiten der Positionsmesseinrichtung dahingehend auswertbar, dass stets eine konstante Verzögerungszeit zwischen dem Auftreten des Positions-Anforderungsbefehles auf Seiten der Verarbeitungseinheit und dem Abarbeiten des Positions-Anforderungsbefehles in der Positionsmesseinrichtung resultiert.

Insbesondere im Fall der Verwendung einer Ethernet-Physik mit bestimmten vorgegebenen Datenübertragungs-Modalitäten gewährleisten die erfindungsgemäßen Maßnahmen ein zeitdeterminiertes Erfassen bzw. Einspeichern von Positionsdaten auf Seiten der Positionsmesseinrichtung, d.h. die Anforderungen an die Echtzeitfähigkeit eines derartigen Schnittstellenkonzeptes lassen sich erfüllen. Das zeitdeterminierte Erfassen von Positionsdaten ist hierbei in allen möglichen Fällen gewährleistet, zu denen ein asynchroner Positions-Anforderungsbefehl auf Seiten der Verarbeitungseinheit auftreten kann. Das erfindungsgemäße Verfahren ist somit interrupt-fähig und damit unabhängig von einem vorgegebenen, festen Taktraster, in dem Positions-Anforderungsbefehle resultieren. Grundsätzlich lässt sich bei jedem asynchron auftretenden Positions-Anforderungsbefehl ein zeitdeterminiertes Erfassen von Positionsdaten auf Seiten der Positionsmesseinrichtung gewährleisten. Die erfindungsgemäßen Maßnahmen lassen sich damit besonders vorteilhaft in Verbindung mit einem Verfahren anwenden, wie es aus der bereits oben erwähnten DE 100 30 358 A1 bekannt ist.

Die erfindungsgemäßen Maßnahmen lassen sich desweiteren besonders vorteilhaft einsetzen, um im Rahmen einer derartigen Datenübertragung eine Bestimmung von Signallaufzeiten zwischen einer Positionsmesseinrichtung und einer Verarbeitungseinheit durchzuführen.

Weitere Vorteile sowie Einzelheiten der vorliegenden Erfindung ergeben sich aus der nachfolgenden Beschreibung eines Ausführungsbeispieles anhand der beiliegenden Figuren.

Dabei zeigt
- Figur 1: ein schematisiertes Blockschaltbild eines Systems aus Positionsmesseinrichtung, Signalübertragungsstrecke und Verarbeitungseinheit;
- Figur 2: verschiedene Signaldiagramme zur Erläuterung eines Standard-Übertragungsmodus einer erfindungsgemäß ausgestalteten Schnittstelle;
- Figur 3: verschiedene Signaldiagramme zur Erläuterung des Falles, bei dem während einer Nutzphase, in der ein Datenpaket an die Positionsmesseinrichtung übertragen wird, ein Positions-Anforderungsbefehl auftritt;
- Figur 4: verschiedene Signaldiagramme zur Erläuterung des Falles, bei dem während einer Leerlauf-Phase, in der keine Nutzdaten an die Positionsmesseinrichtung übertragen werden, ein Positions-Anforderungsbefehl auftritt;
- Figur 5: verschiedene Signaldiagramme zur Erläuterung des Falles, bei dem während einer längeren Leerlauf-Phase, in der keine Nutzdaten an die Positionsmesseinrichtung übertragen werden, ein Positions-Anforderungsbefehl auftritt.

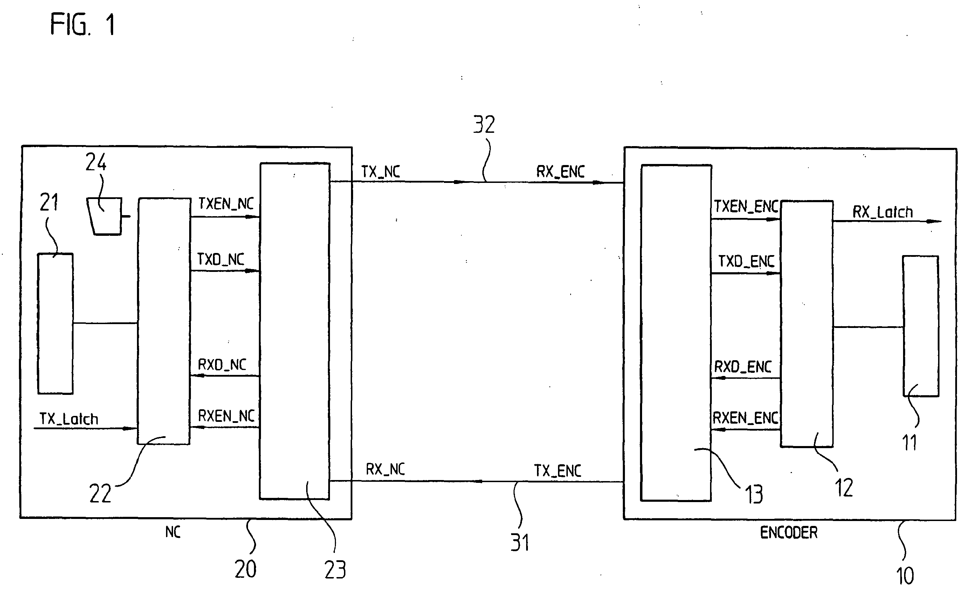

In Figur 1 ist ein stark schematisiertes Blockschaltbild eines Systems aus Positionsmesseinrichtung (ENCODER) 10, Signalübertragungsstrecke und Verarbeitungseinheit (NC) 20 dargestellt. Die serielle Datenübertragung zwischen der Positionsmesseinrichtung 10 und der Verarbeitungseinheit 20 erfolgt im Voll-Duplex-Betrieb über die beiden Datenkanäle 31, 32, welche jeweils ein oder mehrere Leitungen umfassen können. Von der Positionsmesseinrichtung 10 werden Positionsdaten sowie ggf. weitere Daten in einer nicht näher erläuterten Positionsdaten-Erzeugungseinheit 11 oder anderweitig generiert und über einen Protokollbaustein 12 und einen Kommunikationsbaustein 13 zur seriellen Übertragung in Form eines kontinuierlichen Datenstromes über den ersten Datenkanal 31 an die Verarbeitungseinheit 10 aufbereitet. Der Protokollbaustein 12 und der Kommunikationsbaustein 13 sind über eine entsprechende Schnittstelle und eine Reihe von Leitungen miteinander verbunden, auf die im Detail im Verlauf der folgenden Beschreibung eingegangen wird. Als Kommunikationsbaustein 13 dient vorzugsweise ein sog. Fast Ethernet Physical Layer Baustein (Ethernet PHY), über den die serielle Datenübertragung im Rahmen einer vorhandenen Ethernet-Physik in bekannter Art und Weise abgewickelt wird.

Auf Seiten der Verarbeitungseinheit 20 ist eine prinzipiell identische Schnittstellen-Architektur vorgesehen, d.h. über einen weiteren Kommunikationsbaustein 23 und einen Protokollbaustein 22 werden die übertragenen Daten einer Positionsdaten-Verarbeitungseinheit 21 zugeführt, die die Daten geeignet weiterverarbeitet. Analog hierzu ist eine Datenübertragung über die gleichen Bausteine und den zweiten Datenkanal 32 von der Verarbeitungseinheit 20 in Richtung der Positionsmesseinrichtung 10 möglich. Hierbei kann es sich z.B. um Befehlsdaten, Parametrierungsdaten etc. handeln, welche an die Positionsmesseinrichtung übertragen werden.

Ferner ist zu erwähnen, dass auf Seiten der Verarbeitungseinheit 20 dem Protokollbaustein 22 eine Einheit 24 zugeordnet ist, die nachfolgend als Zustandsautomat 24 bezeichnet sei, der abhängig von den gerade übertragenen Daten eine bestimmte Information liefert. Dessen genaue Funktion für die vorliegende Erfindung wird im Verlauf der nachfolgenden Beschreibung noch detailliert erläutert.

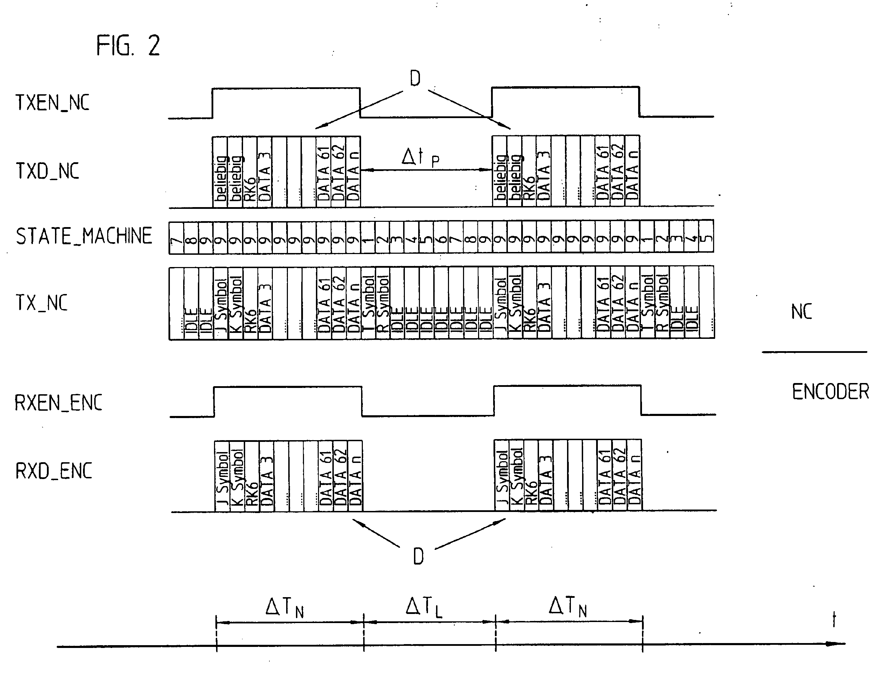

Es sei an dieser Stelle darauf hingewiesen, dass Figur 1 lediglich eine stark schematisierte Darstellung der Gesamt-Architektur darstellt und nur die zur Erläuterung der vorliegenden Erfindung erforderlichen Komponenten angedeutet sind. Auf die verschiedenen Leitungen, die einzelne Komponenten miteinander verbinden, wird im Verlauf der folgenden Beschreibung der Figuren 2 - 4 noch näher eingegangen. Selbstverständlich umfassen die Positionsmesseinrichtung 10 und die Verarbeitungseinheit 20 weitere funktionsrelevante Komponenten; die jedoch aus Gründen der Übersichtlichkeit in Figur 1 nicht dargestellt sind

In einer konkreten Anwendung ist die Positionsmesseinrichtung 10 beispielsweise in einer Werkzeugmaschine angeordnet und dient zur Bestimmung der Position eines beweglichen Maschinenteiles, beispielsweise eines Werkzeuges, als Verarbeitungseinheit 20 fungiert eine numerische Werkzeugmaschinensteuerung. Alternativ hierzu kann es sich bei der Positionsmesseinrichtung 10 auch um einen Drehgeber an einem elektrischen Antrieb handeln, als Verarbeitungseinheit 20 fungiert eine entsprechende Antriebsregelung etc..

Anhand der Figuren 1 und 2 sei nachfolgend der Standard-Übertragungsmodus bei der vorgesehenen seriellen Datenübertragung zwischen Positionsmesseinrichtung 10 und Verarbeitungseinheit 20 erläutert, wobei in diesem Beispiel lediglich die Übertragung von Daten auf dem zweiten Datenkanal 32 von der Verarbeitungseinheit 20 in Richtung der Positionsmesseinrichtung 10 erläutert ist. Grundsätzlich identisch verläuft die Datenübertragung auch in der anderen Richtung.

Im oberen Teil der Figur 2 sind eine Reihe von Signalen auf Seiten der Verarbeitungseinheit (NC) im zeitlichen Verlauf der Datenübertragung dargestellt, die beiden unteren Diagramme zeigen die Verhältnisse auf Seiten der Positionsmesseinrichtung (ENCODER).

Grundsätzlich erfolgt die Datenübertragung zwischen dem jeweiligen Protokollbaustein 22 und dem Kommunikationsbaustein 23 in Datenpaketen D, wobei zwischen aufeinanderfolgenden Datenpaketen D ein bestimmter zeitlicher Abstand Δt_{P} eingehalten werden muss. Die Datenpakete D werden auf der Leitung TXD_NC vom Protokollbaustein 22 an den Kommunikationsbaustein 23 bzw. Ethernet PHY übertragen. Um Datenpakete D übertragen zu können, muss das auf der Leitung TXEN_NC anliegende Signal den logischen Pegel HIGH aufweisen, während in den dazwischen liegenden Übertragungspausen auf dieser Leitung TXEN_NC der logische Pegel LOW anliegt. Vom Kommunikationsbaustein 23 aus erfolgt eine Übertragung der jeweiligen Daten auf dem zweiten Datenkanal 32 bzw. der Leitung TX_NC in Richtung der Positionsmesseinrichtung 10 in einem kontinuierlichen Datenstrom. Der kontinuierliche Datenstrom besteht hierbei zum einen aus den Datenpaketen D mit den verschiedenartigen Nutzdaten, die in Form von Nutzdatensymbolen "RK6", "DATA", "DATA 3",..., "DATA n" etc. übertragen werden. Zum anderen umfasst der kontinuierliche Datenstrom Leerdaten bzw. Leerdatensymbole "IDLE", die zwischen die Datenpakete D mit den Nutzdaten eingefügt werden, wie dies anhand der Darstellung der Verhältnisse auf der Leitung TX_NC in Figur 2 ersichtlich ist. Nachfolgend seien die Zeiten bzw. Übertragungsphasen, in denen die Übertragung der Datenpakete D erfolgt, als Nutzphasen ΔT_{N} bezeichnet. Die dazwischen liegenden Zeiten bzw. Übertragungsphasen, in denen keine Daten übertragen werden, werden als Leerlaufphasen ΔT_{L}bezeichnet.

Für die Form der auf der Leitung TX_NC übertragenen Daten existieren aufgrund der Nutzung einer herkömmlichen Ethernet-Physik bestimmte Rahmenbedingungen. So umfassen die übertragenen Datenpakete D jeweils eine bestimmte Anzahl von Nutzdatensymbolen, wobei jedes Datenpaket D mit zwei definierten Datensymbolen "J Symbol", "K Symbol" beginnt und mit den Datensymbolen "T Symbol", "R Symbol" endet. Ebenso ist die Minimal-Anzahl der übertragenen Leerdatensymbole "IDLE" in den Leerlaufphasen ΔT_{L} vorgegeben; es können je nach aktueller Anforderung selbstverständlich aber auch längere Leerlaufphasen ΔT_{L} vorliegen, in denen dann entsprechend mehr Leerdatensymbole "IDLE" übertragen werden, bevor wieder ein Datenpaket D mit Nutzdaten übertragen wird. Um den oben diskutierten Echtzeitanforderungen gerecht zu werden und um einen möglichst schnellen Datenaustausch sicherzustellen, wird im Rahmen der vorliegenden Erfindung die Anzahl N_{IDLE} der Leerdatensymbole "IDLE" in den Leerlaufphasen ΔT_{L} soweit wie möglich minimiert, im vorliegenden Beispiel wird hierzu die Minimalanzahl N_{IDLE, min} von Leerdatensymbolen "IDLE" N_{IDLE,min} = 7 gewählt, d.h. es gilt immer N_{IDLE} ≥ 7.

Im unteren Teil der Figur 2 sind die auf den Leitungen RXEN_ENC und RXD_ENC zwischen dem Kommunikationsbaustein 13 und dem Protokollbaustein 12 der Positionsmesseinrichtung 10 anliegenden Signale während der Übertragung der Datenpakete D von der Verarbeitungseinheit 20 her dargestellt. Solange hierbei während der Übertragung Datenpakete D empfangen werden, wird in den Nutzphasen ΔT_{N} auf der Leitung RXEN_ENC zwischen dem Kommunikationsbaustein 13 und dem Protokollbaustein 12 das entsprechende Signal auf den logischen Pegel HIGH gesetzt, in den Leerlaufphasen ΔT_{L} auf den logischen Pegel LOW.

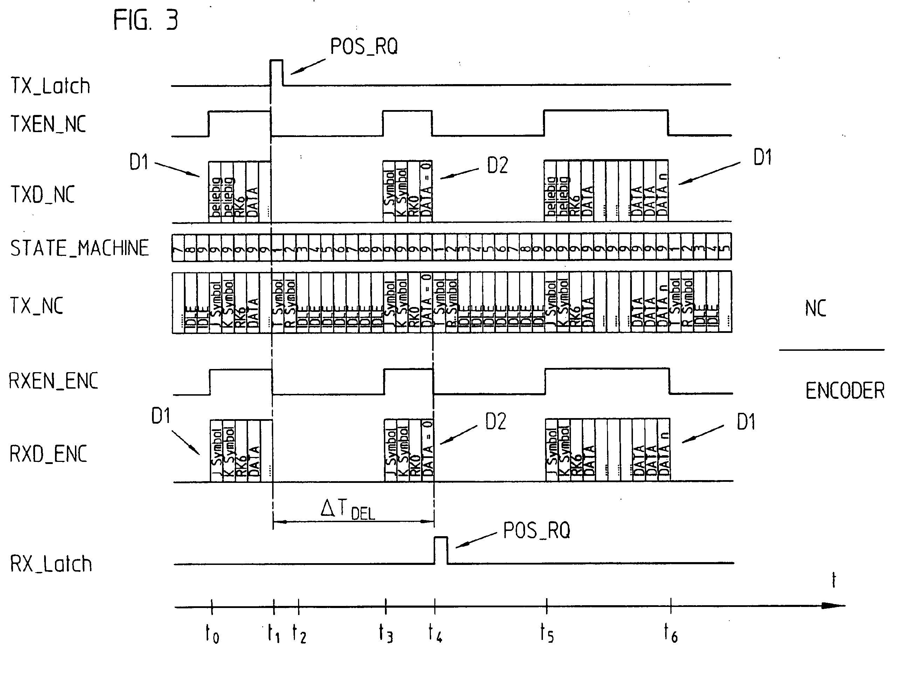

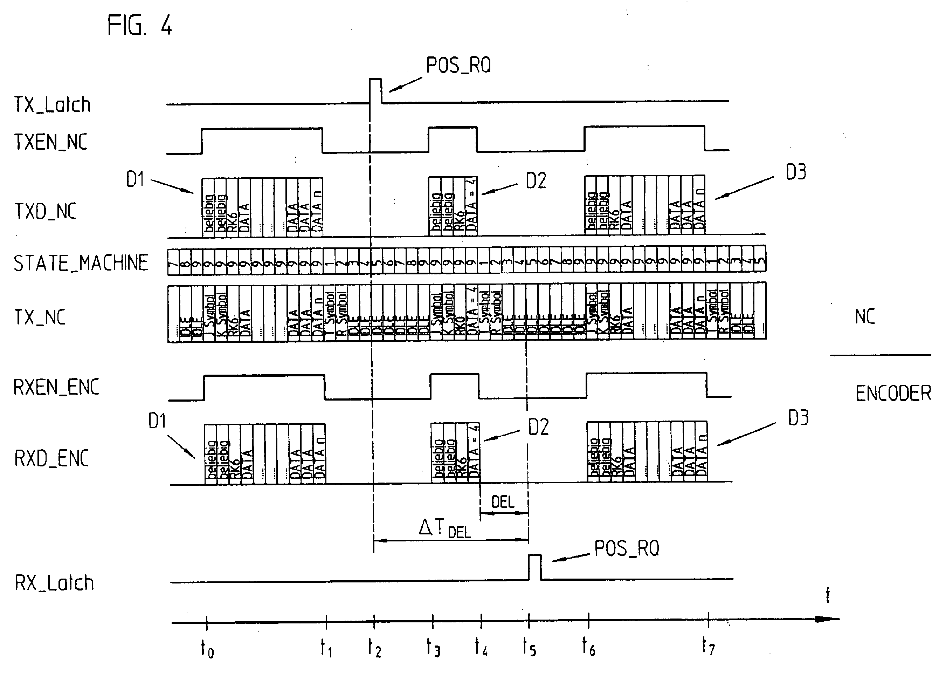

In Figur 2 sind neben den bislang erläuterten Signalen auf den verschiedenen Leitungen ferner die am Zustandsautomat 24 (STATE_MACHINE) verfügbaren Informationen bezüglich des Status der laufenden Datenübertragung dargestellt. Der Zustandsautomat 24 ist im dargestellten Ausführungsbeispiel wie erwähnt dem Protokollbaustein 22 auf Seiten der Verarbeitungseinheit 20 zugeordnet. Dessen Funktion für die vorliegende Erfindung wird im Verlauf der folgenden Beschreibung der Figuren 3 und 4 näher beschrieben.

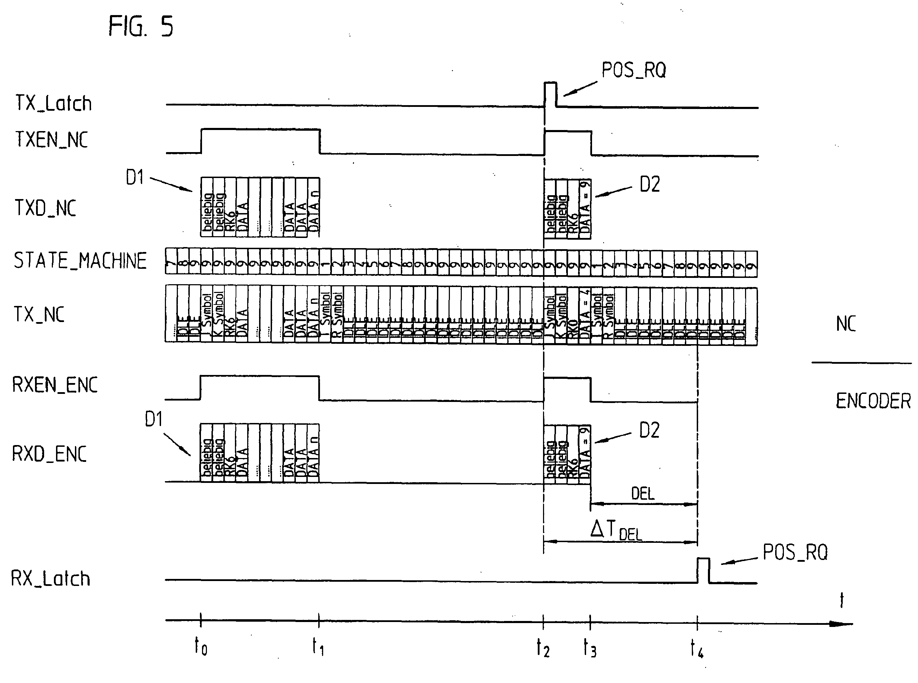

Wie bereits eingangs erläutert, ist für die Echtzeit-Fähigkeit der vorliegenden Schnittstelle wesentlich, dass zu jedem auftretenden Positions-Anforderungsbefehl auf Seiten der Verarbeitungseinheit 20 zeitdeterminiert das Abarbeiten des Positions-Anforderungsbefehles, d.h. das Einspeichern der aktuellen Position, auf Seiten der Positionsmesseinrichtung 10 erfolgt. Da im Fall des vorliegenden Schnittstellenprotokolles derartige Positions-Anforderungsbefehle grundsätzlich asynchron, also zu jedem möglichen Zeitpunkt, auftreten können, müssen bei einer Datenübertragung wie anhand von Figur 2 erläutert, verschiedene Fälle betrachtet werden, in denen ein Positions-Anforderungsbefehl auftreten kann. Es handelt sich hierbei um die beiden Fälle, dass ein entsprechender Positions-Anforderungsbefehl
a) in einer Nutzphase ΔT_{N} oder
b) in einer Leerlaufphase ΔT_{L}
der laufenden Datenübertragung auftritt. Um sicherzustellen, dass in beiden Fällen ein zeitdeterminiertes Abarbeiten des Positions-Anforderungsbefehles, also das Einspeichern der aktuellen Position in der Positionsmesseinrichtung 10 erfolgt, sind die nachfolgend anhand von Figur 3 und 4 erläuterten, erfindungsgemäßen Maßnahmen erforderlich. Anhand von Figur 5 wird abschließend ein Spezialfall zum Fall b) beschrieben, bei dem nach einer längeren Leerlaufphase ein Positions-Anforderungsbefehl auftritt.

Zunächst sei anhand der Figur 3 derjenige Fall im Detail erläutert, bei dem ein Positions-Anforderungsbefehl POS_RQ während einer Nutzphase der laufenden Datenübertragung von der Verarbeitungseinheit zur Positionsmesseinrichtung auftritt. Die Nutzphase hat hierbei zum Zeitpunkt t₀ mit der Übertragung eines Datenpaketes D1 begonnen In Figur 3 sind im mittleren Teil wieder die Verhältnisse während der Datenübertragung auf den Leitungen veranschaulicht wie in Figur 2. Ferner ist auf Seiten der Verarbeitungseinheit der zum Zeitpunkt t₁ auftretende Positions-Anforderungsbefehl POS_RQ veranschaulicht, der auf einer Leitung TX_Latch dem Protokollbaustein 23 zugeführt wird und über den ein möglichst umgehendes Einspeichern und Übertragen der aktuellen Positionsdaten von der Positionsmesseinrichtung 10 angefordert wird. Über den Positions-Anforderungsbefehl POS_RQ wird zum Zeitpunkt t₁ die laufende Übertragung des Datenpaketes D1 auf der Leitung TXD_NC zum Kommunikationsbaustein 23 abgebrochen bzw. die Übertragung des Datenpaketes D1 auf Leitung TX_NC zur Positionsmesseinrichtung unterbrochen. Zum definierten Beenden der Übertragung des Datenpaketes D1 während der Nutzphase erfolgt auf der Leitung TX_NC noch die Übertragung der beiden bereits oben erwähnten Datensymbole "T Symbol", "R Symbol". Die Übertragung der Datensymbole "T Symbol", "R Symbol" durch den Kommunikationsbaustein 23 erfolgt hierbei automatisch, sobald das Signal auf der Leitung TXEN_NC von HIGH auf LOW gesetzt wird; solange dieses Signal auf dem Wert LOW ist, erfolgt die Übertragung von Leerdatensymbolen "IDLE". Nach der Übertragung der beiden Datensymbole "T Symbol", "R Symbol" beginnt demzufolge zum Zeitpunkt t₂ die zumindest erforderliche Übertragung von insgesamt N_{IDLE} = 7 Leerdatensymbolen "IDLE" auf der Leitung TX_NC in der entsprechenden Leerlaufphase. Nach Beendigung der Leerlaufphase startet zum Zeitpunkt t₃ die Übertragung eines Datenpaketes D2, in dem zwischen den begrenzenden Datensymbolen "J Symbol", "K Symbol" und "T Symbol", "R Symbol" die Nutzdatensymbole "RK0" und "DATA = 0" an die Positionsmesseinrichtung übertragen werden. Beim ersten Nutzdatensymbol "RK0" handelt es sich hierbei um den entsprechend aufbereiteten Positions-Anforderungsbefehl POS_RQ, beim zweiten Nutzdatensymbol "DATA = 0" handelt es sich um eine nachfolgend noch zu erläuternde zweite Verzögerungsinformation.

Wie aus den im unteren Teil der Signaldiagramme in Figur 3 dargestellten Verhältnissen auf Seiten der Positionsmesseinrichtung hervorgeht, liegt nach Übertragung des Datenpaketes D2 der entsprechende Positions-Anforderungsbefehl POS_RQ auf einer Leitung RX-Latch auf Seiten der Positionsmesseinrichtung zum Zeitpunkt t₄ vor und kann abgearbeitet werden, d.h. das Einspeichern der aktuellen Position kann erfolgen.

Nach einer erneuten Leerlaufphase mit der Übertragung von Leerdatensymbolen "IDLE" wird zum Zeitpunkt t₅ schließlich noch einmal das Datenpaket D1 vollständig an die Positionsmesseinrichtung übertragen, dessen Übertragung vorher beim Auftreten des Positions-Anforderungsbefehls POS_RQ zum Zeitpunkt t₁ unterbrochen wurde. Die Übertragung des Datenpaketes D1 ist zum Zeitpunkt t₆ beendet.

Nicht dargestellt ist in Figur 3, wie nach dem Abarbeiten des Positions-Anforderungsbefehles POS_RQ in der Positionsmesseinrichtung schließlich die erzeugten Positionsdaten von der Positionsmesseinrichtung an die Verarbeitungseinheit übertragen werden.

Kritisch für die Echtzeitfähigkeit der vorliegenden Schnittstelle ist nunmehr insbesondere die Zeit zwischen dem Zeitpunkt t₁, zu dem der Positions-Anforderungsbefehl POS_RQ auf Seiten der Verarbeitungseinheit auftritt, und dem Zeitpunkt t₄, zu dem der Positions-Anforderungsbefehl POS_RQ auf Seiten der Positionsmesseinrichtung abgearbeitet werden kann. Die zwischen diesen Zeitpunkten liegende Verzögerungszeit ΔT_{DEL} sollte zum einen möglichst minimal sein und zum anderen in jedem Fall eines asynchron auftretenden Positions-Anforderungsbefehles POS_RQ möglichst identisch sein, um ein zeitlich determiniertes Erfassen der Positionen auf Seiten der Positionsmesseinrichtung zu gewährleisten. Im beschriebenen Fall, in dem der Positions-Anforderungsbefehl POS_RQ während einer Nutzphase auf Seiten der Verarbeitungseinheit auftrat, die umgehend unterbrochen werden konnte, waren keine weiteren Maßnahmen erforderlich, um die Verzögerungszeit ΔT_{DEL} zu minmieren. Nach dem Abbruch der Übertragung des Datenpaektes D1 erfolgte anschließend lediglich die Übertragung der minimal (N_{IDLE,min} = 7) erforderlichen Leerdatensymbole "IDLE" in der Leerlaufphase, anschließend konnte das Datenpaket D2 mit dem Nutzdatensymbol "RK0" bzgl. des Positions-Anforderungsbefehles übertragen werden. Die zwischen den Zeitpunkten t₁ und t₄ liegende Zeitdauer stellt somit die minimal mögliche Verzögerungszeit ΔT_{DEL} dar, wenn ein Positions-Anforderungsbefehl POS_RQ während einer Nutzphase auftritt. Eventuelle Korrekturmaßnahmen sind in diesem Fall nicht erforderlich. Die im Datenpaket D2 übertragene zweite Verzögerungsinformation bzw. das entsprechende Nutzdatensymbol wurde daher auf den Wert "DATA = 0" gesetzt.

Andere Verhältnisse und daraus erforderliche Maßnahmen resultieren hingegen in dem Fall, in dem ein Positionsanforderungsbefehl POS_RQ während einer Leerlaufphase der laufenden Datenübertragung von der Verarbeitungseinheit zur Positionsmesseinrichtung auftritt. Dieser Fall wird nachfolgend anhand der Figur 4 im Detail erläutert. Dargestellt ist wiederum die Übertragung der Signale auf den verschiedenen Leitungen analog zu den Figuren 2 und 3.

Nach der Übertragung eines Datenpaketes D1 mit verschiedenen Nutzdaten bzw. Nutzdatensymbolen "RK6", "DATA", etc. zwischen den Zeitpunkten t₀ und t₁ tritt nunmehr im Verlauf einer nachfolgenden Leerlaufphase zum Zeitpunkt t₂ auf Seiten der Verarbeitungseinheit ein Positions-Anforderungsbefehl POS_RQ auf. Hierbei resultiert der Positions-Anforderungsbefehl POS_RQ im vorliegenden Beispiel in der Leerlaufphase nach der bereits erfolgten Übertragung von vier Leerdatensymbolen "IDLE". Diese Information ist über den bereits erwähnten Zustandsautomaten 24 verfügbar, d.h. die Information, wann in der Leerlaufphase der Positions-Anforderungsbefehl aufgetreten ist. Nachfolgend wird diese Information als erste Verzögerungsinformation bezeichnet. Mit anderen Worten ausgedrückt: Aus den Informationen des Zustandsautomaten 24 lässt sich die zeitliche Lage des Positions-Anforderungsbefehles POS_RQ während der Leerlaufphase ableiten.
In Figur 2 wie auch in den nachfolgenden Figuren ist die über den Zustandsautomaten verfügbare Information im Verlauf der Datenübertragung in demjenigen Teil des Diagrammes dargestellt, die mit "STATE_MACHINE" bezeichnet ist.

Bedingt durch die gewählte Art der Datenübertragung auf Basis einer Ethernet-Physik lässt sich die Leerlaufphase nicht umgehend beenden. Erforderlich ist vielmehr das Senden der Minmalzahl N_{IDLE,min} = 7 von Leerlaufsymbolen "IDLE" und damit das ordnungsgemäße Beenden der minimal möglichen Leerlaufphase. Erst zum Zeitpunkt t₃ kann schließlich mit der Übertragung des Datenpaketes D2 und dem entsprechend aufbereiteten Positions-Anforderungsbefehl an die Positionsmesseinrichtung begonnen werden. Zu Beginn des Datenpaketes D2 werden wiederum die erforderlichen Datensymbole "J Symbol", "K Symbol" übertragen, an den sich das Nutzdatensymbol "RK0" das den Positions-Anforderungsbefehl darstellt, anschließt. Anschließend an den Datenrahmen mit dem Nutzdatensymbol "RK0" erfolgt die Übertragung eines Datenrahmens mit dem Nutzdatensymbol "DATA = 4". Dieses Nutzdatensymbol stellt eine erste Verzögerungsinformation dar, die im konkreten Beispiel angibt, wie die zeiltiche Lage des Positions-Anforderungsbefehles POS_RQ während der Leerlaufphase war. Nach der Beendigung der Übertragung des Datenpaketes D2 mit den entsprechenden Informationen bzgl. des Positions-Anforderungsbefehles POS_RQ und der ersten Verzögerungsinformation zum Zeitpunkt t₄, erfolgt zum Zeitpunkt t₅ schließlich das Abarbeiten des Positions-Anforderungsbefehles POS_RQ auf Seiten der Positionsmesseinrichtung, d.h. das Einspeichern der aktuellen Position.

Wie aus Figur 4 ersichtlich, wird auf Seiten der Positionsmesseinrichtung die im Datenpaket D2 übertragene erste Verzögerungsinformation mit dem übertragenen Nutzdatensymbol "DATA = 4" derart ausgewertet, dass nach Beendigung der Übertragung des Datenpaketes D2 zum Zeitpunkt t₄ erst um eine bestimmte Verzögerungszeitdauer DEL verzögert mit der Abarbeitung des Positions-Anforderungsbefehles POS_RQ begonnen wird. Die Verzögerungszeitdauer DEL entspricht hierbei der übertragenen ersten Verzögerungsinformation bzw. dem entsprechenden Nutzdatensymbol "DATA = 4", also derjenigen Zeit nach Beginn der Leerlaufphase zum Zeitpunkt t₁, nach der der Positionsanforderungsbefehl POS_RQ zum Zeitpunkt t₂ auftrat. Die Verzögerungszeitdauer DEL ergibt sich im Beispiel somit aus DEL = t₂ - t₁.

Durch eine derart verzögerte Abarbeitung resultiert somit auch in diesem Fall zwischen dem Auftreten des Positions-Anforderungsbefehls POS_RQ zum Zeitpunkt t₁ und dem Abarbeiten des Positions-Anforderungsbefehls POS_RQ zum Zeitpunkt t₅ eine Verzögerungszeit ΔT_{DEL}, die identisch mit der Verzögerungszeit ΔT_{DEL} im oben erläuterten Fall der Figur 3 ist. Ein zeitdeterminiertes Abarbeiten von Positions-Anforderungsbefehlen POS_RQ ist somit gewährleistet, unabhängig vom Zeitpunkt, wann ein Positions-Anforderungsbefehl POS_RQ auftritt.

Zum Zeitpunkt t₆ beginnt nach Abschluss der anschließenden Leerlaufphase die Übertragung des nächsten Datenpaketes D3, die zum Zeitpunkt t₇ beendet ist usw..

Wie aus den beiden erläuterten Fällen ersichtlich, ist durch die Übertragung einer ersten oder zweiten Verzögerungsinformation - je nachdem, in welcher Phase der Datenübertragung der Positions-Anforderungsbefehl POS_RQ auftritt - gewährleistet, dass stets eine definierte, d.h. vorzugsweise konstante, Zeitdauer bzw. Verzögerungszeit ΔT_{DEL} zwischen dem Auftreten des Positions-Anforderungsbefehles POS_RQ und dessen Abarbeitung in der Positionsmesseinrichtung resultiert. Die Verzögerungsinformationen werden hierbei derart gewählt, dass unabhängig vom Zeitpunkt, zu dem der Positions-Anforderungsbefehl POS_RQ auftritt die konstante Verzögerungszeit ΔT_{DEL} gewährleistet ist.

Die Verzögerungszeit ΔT_{DEL} ergibt sich im vorliegenden Fall aus der Übertragungsdauer der jeweiligen Datensymbole für die vorgegebene Anzahl N_{IDLE} von Leerdatensymbolen "IDLE", den Übertragungsdauern für das Senden der Datensymbole "J Symbol", "K Symbol" zum Beginn und der Datensymbole "T Symbol", "R Symbol" zum Beenden von Datenpaketen D sowie den Übertragungsdauem für die Nutzdatensymbole bzgl. des Positions-Anforderungsbefehls POS_RQ und der ersten oder zweiten Verzögerungsinformation bzw. den entsprechenden Nutzdatensymbolen.

Wie im Fall der Figur 3 erläutert, resultiert im Beispielfall eine minimale Verzögerungszeit ΔT_{DEL}, die der Übertragungsdauer von insgesamt 13 Datensymbolen entspricht. Die 13 Datensymbole ergeben sich aus den sieben Datensymbolen für die Minimalzahl von N_{IDLE,min} = 7 vorgesehenen Leerdatensymbolen "IDLE", vier Datensymbolen "J Symbol", "R Symbol" zum Beginnen und Beenden der Datenpakete und den beiden Nutzdatensymbolen "RK0" sowie "DATA = 0" bzw. "DATA = 4". Auf diese minimale Verzögerungszeit ΔT_{DEL} wird dann entsprechend auch der Fall eingestellt, in dem gemäß Figur 4 während einer Leerlaufphase der Positions-Anforderungsbefehl POS_RQ auftritt.

Abschließend sei anhand von Figur 5 noch ein Spezialfall des vorher erläuterten Falles beschrieben, bei dem nunmehr nach einer längeren Leerlaufphase der Positions-Anforderungsbefehl POS_RQ auf Seiten der Verarbeitungseinheit auftritt. Dargestellt ist in Figur 5 wiederum der Signalverlauf analog zu den bisher diskutierten Fällen.

Nach der Übertragung eines ersten Datenpaketes D1 zwischen den Zeitpunkten t₁ und t₂ schließt sich im vorliegenden Fall eine längere Leerlaufphase an. Die Leerlaufphase dauert somit deutlich länger als die vorgegebene Minimaldauer mit N_{IDLE,min} = 7 übertragenen Leerdatensymbolen "IDLE". Erst nach der Übertragung von ingesamt siebzehn Leerdatensymbolen "IDLE" auf der Leitung TX_NC resultiert nunmehr zum Zeitpunkt t₂ der Positions-Anforderungsbefehl POS_RQ auf der Leitung TX_Latch auf Seiten der Verarbeitungseinheit. Da die Leerlaufphase zu diesem Zeitpunkt bereits deutlich länger dauerte als die vorgegebene Minimaldauer, kann die Leerlaufphase umgehend abgebrochen werden und sofort mit der Übertragung des Datenpaketes D2 begonnen werden. Das Datenpaket D2 startet wiederum mit den Datensymbolen "J Symbol", K Symbol", an die sich die Übertragung des Nutzdatensymboles "RK0" mit dem entsprechend aufbereiteten Positions-Anforderungsbefehl anschließt. Ferner erfolgt in diesem Datenpaket D2 abschließend die Übertragung einer ersten Verzögerungsinformation an die Positionsmesseinrichtung in Form des Nutzdatensymboles "DATA = 9". Auf Seiten der Positionsmesseinrichtung wird die erste Verzögerungsinformation "DATA = 9" wiederum derart ausgewertet, dass nach Beendigung der Übertragung des Datenpaketes D2 zum Zeitpunkt t₃ erst nach einer bestimmten Verzögerungszeitdauer DEL die Abarbeitung des Positions-Anforderungsbefehles POS_RQ erfolgt, d.h. zum Zeitpunkt t₄. Die erste Verzögerungsinformation "DATA = 9" bzw. die Verzögerungszeitdauer DEL wurde erneut so gewählt, dass eine Verzögerungszeitdauer ΔT_{DEL} zwischen dem Zeitpunkt t₂ und dem Zeitpunkt t₄ resultiert, die identisch zu den beiden vorherigen Fällen ist. Das zeitdeterminierte Abarbeiten des Positions-Anforderungsbefehels POS_RQ bzw. das Einspeichern der aktuellen Positionsdaten ist damit auch in diesem Fall sichergestellt.

Im Verlauf der Beschreibung der vorliegenden Erfindung wurde bislang noch nicht erwähnt, dass die von der Positionsmesseinrichtung zur Verarbeitungseinheit übertragenen Signale und umgekehrt, selbstverständlich eine bestimmte Laufzeit auf den verschiedenen Datenkanälen besitzen, d.h. im Verlauf der Datenübertragung resultieren laufzeitbedingte Signalverzögerungen. Derartige Signalverzögerungen machen sich umso stärker bemerkbar, je länger die entsprechenden Kabel sind. Um den eingangs diskutierten Echtzeitanforderungen an eine schnelle, digitale Schnittstelle gerecht zu werden, ist es vorteilhaft, die für eine bestimmte Übertragungsstrecke erforderlichen Signalverzögerungen bzw. Signallaufzeiten zu erfassen und bei der Signalverarbeitung in Form geeigneter Kompensationsmaßnahmen zu berücksichtigen. Voraussetzung für die Kompensation derartiger Signallaufzeiten ist jedoch, dass diese zunächst für eine bestimmte Übertragungsstrecke erfasst werden. Dies kann beispielsweise durch eine geeignete Laufzeitmessung vor der Inbetriebnahme erfolgen. Für eine derartige Laufzeitmessung lassen sich in besonders vorteilhafter Weise auch die Maßnahmen einsetzen, die oben im Zusammenhang mit dem möglichst zeitdeterminierten Abarbeiten eines Positions-Anforderungsbefehles erläutert wurden.

So kann zur hochpräzisen Laufzeitmessung etwa der Positions-Anforderungsbefehl POS_RQ verwendet werden, der von der Verarbeitungseinrichtung - wie oben erläutert - an die Positionsmesseinrichtung übertragen und von dieser dann wieder an die Verarbeitungseinheit zurück übertragen wird. Die vom Absenden des Positions-Anforderungsbefehles POS_RQ zum Zeitpunkt t_{S} bis zum Empfangen des Positions-Anforderungsbefehles POS_RQ zum Zeitpunkt t_{R} verstrichene Zeit Δt = t_{R} - t_{S} kann zur Bestimmung der Signallaufzeit t_{L} auf dieser Übertragungsstrecke verwendet werden.

Hierzu ist beispielsweise über einen Zähler auf Seiten der Verarbeitungseinheit die entsprechende Zeit Δt zu erfassen. Ist zudem die Signalverarbeitungszeit t_{cal} zur Abarbeitung eines derartigen Verfahrens in Positionsmesseinrichtung und Verarbeitungseinheit bekannt, lässt sich derart die Signallaufzeit t_{L} bestimmen. Da aufgrund der oben erläuterten Maßnahmen eine zeitderminierte Übertragung des zur Laufzeitmessung genutzten Positions-Anforderungsbefehles POS_RQ gewährleistet ist, lässt sich über die vorliegende Erfindung mit hoher Genauigkeit die Signallaufzeit t_{L} bei einer derartigen Schnittstellen-Architektur bestimmen.

Zur Durchführung einer entsprechenden Laufzeitmessung auf Grundlage der vorliegenden Erfindung ist ergänzend zum dargestellten Beispiel in Figur 1 lediglich noch auf Seiten der Positionsmesseinrichtung ein Zustandsautomat vorzusehen, der dort dem Protokollbaustein zugeordnet wird und prinzipiell die gleiche Funktion übernimmt wie der Zustandsautomat auf Seiten der Verarbeitungseinheit.

Neben dem erläuterten Beispiel existieren im Rahmen der vorliegenden Erfindung selbstverständlich noch weitere Ausführungsvarianten.

## Patentansprüche

1. Verfahren zur seriellen Datenübertragung zwischen einer Positionsmesseinrichtung (10) und einer Verarbeitungseinheit (20), **dadurch gekennzeichnet, dass** die Übertragung von Daten in Form von Datenpaketen (D, D1, D2) im Verlauf von Nutzphasen (ΔT_{N}) erfolgt und zwischen aufeinanderfolgenden Nutzphasen (ΔT_{N}) Leerlaufphasen (ΔT_{L}) liegen, in denen keine Daten übertragen werden und wobei im Fall des Auftretens eines Positions-Anforderungsbefehles (POS_RQ) während einer Leerlaufphase (ΔT_{N}), nach Beendigung der Leerlaufphase (ΔT_{L}) der Positions-Anforderungsbefehl (POS_RQ) zusammen mit einer ersten Verzögerungsinformation (DATA = 4; DATA = 9) an die Positionsmesseinrichtung (10) übertragen wird und die erste Verzögerungsinformation (DATA = 4; DATA = 9) auf Seiten der Positionsmesseinrichtung (10) dahingehend auswertbar ist, dass stets eine konstante Verzögerungszeit (ΔT_{DEL}) zwischen dem Auftreten des Positions-Anforderungsbefehles (POS_RQ) auf Seiten der Verarbeitungseinheit (20) und dem Abarbeiten des Positions-Anforderungsbefehles (POS_RQ) in der Positionsmesseinrichtung (10) resultiert.

2. Verfahren nach Anspruch 1, wobei im Fall des Auftretens eines Positions-Anforderungsbefehles (POS_RQ) während einer Nutzphase (ΔT_{N}), in der Daten von der Verarbeitungseinheit (20) an die Positionsmesseinrichtung (10) übertragen werden, die Übertragung des aktuellen Datenpaketes (D, D1, D2) beendet wird und nach Beendigung der darauffolgenden Leerlaufphase (ΔT_{L}) der Positions-Anforderungsbefehl (POS_RQ) an die Positionsmesseinrichtung (10) übertragen wird.

3. Verfahren nach Anspruch 2, wobei zusammen mit dem Positions-Anforderungsbefehl (POS_RO) eine zweite Verzögerungsinformation (DATA = 0) an die Positionsmesseinrichtung (10) übertragen wird, und die zweite Verzögerungsinformation (DATA = 0) auf Seiten der Positionsmesseinrichtung (10) dahingehend auswertbar ist, dass stets eine konstante Verzögerungszeit (ΔT_{DEL}) zwischen dem Auftreten des Positions-Anforderungsbefehles (POS_RQ) auf Seiten der Verarbeitungseinheit (20) und dem Abarbeiten des Positions-Anforderungsbefehles (POS_RQ) in der Positionsmesseinrichtung (10) resultiert.

4. Verfahren nach Anspruch 3, wobei die zweite Verzögerungsinformation (DATA = 0) eine minimale Verzögerungszeit angibt.

5. Verfahren nach Anspruch 1 oder 3, wobei die Verzögerungsinformationen (DATA = 4, DATA = 9, DATA = 0) jeweils derart gewählt werden, dass unabhängig vom Zeitpunkt des Auftretens des Positions-Anforderungsbefehles (POS_RQ) auf Seiten der Verarbeitungseinheit (20) stets eine konstante Verzögerungszeit (ΔT_{DEL}) zwischen dem Auftreten des Positions-Anforderungsbefehles (POS_RQ) auf Seiten der Verarbeitungseinheit (20) und dem Abarbeiten des Positions-Anforderungsbefehles (POS_RQ) in der Positionsmesseinrichtung (10) resultiert.

6. Verfahren nach Anspruch 1, wobei die Leerlaufphase (ΔT_{L}), während der der Positions-Anforderungsbefehl (POS_RQ) auftritt, erst nach einer vorgegebenen Mindestdauer beendet wird und im Verlauf der Leerlaufphase (ΔT_{L}) laufend Leerdatensymbole (IDLE) übertragen werden.

7. Verfahren nach Anspruch 1, wobei nach dem Abarbeiten des Positions-Anforderungsbefehles (POS_RQ) in der Positionsmesseinrichtung (10) Positionsdaten von der Positionsmesseinrichtung (10) zur Verarbeitungseinheit (20) übertragen werden.

8. Verfahren nach Anspruch 2, wobei die vollständige Übertragung desjenigen Datenpaketes (D1), dessen Übertragung nach dem Auftreten des Positions-Anforderungsbefehles (POS_RQ) unterbrochen wurde, nach dem erfolgten Übertragen des Positions-Anforderungsbefehles (POS_RQ) wiederholt wird.

9. Verfahren nach Anspruch 1, wobei die Datenübertragung zwischen der Positionsmesseinrichtung (10) und der Verarbeitungseinheit (20) auf zwei Datenkanälen (31, 32) im Vollduplex-Betrieb erfolgt.

10. Verfahren nach Anspruch 1 und 3, wobei der Positions-Anforderungsbefehl (POS_RQ) zur Laufzeitmessung zwischen der Verarbeitungseinheit (20) und der Positionsmesseinrichtung (10) verwendet wird, indem der Positions-Anforderungsbefehl (POS_RQ) von der Verarbeitungseinheit (20) an die Positionsmesseinrichtung (10) übertragen und von dieser dann wieder an die Verarbeitungseinheit (20) zurück übertragen wird und die vom Absenden des Positions-Anforderungsbefehles (POS_RQ) bis zum Empfangen des Positions-Anforderungsbefehles (POS_RQ) verstrichene Zeit (Δt) zur Bestimmung der Signallaufzeit (t_{L}) auf dieser Übertragungsstrecke herangezogen wird.

11. Vorrichtung auf Basis einer Ethernet-Physik, eingerichtet zur Durchführung eines Verfahrens nach mindestens einem der vorangehenden Ansprüche.

## Claims

1. Method for serial data transfer between a position measuring device (10) and a processing unit (20), **characterised in that** the transfer of data in the form of data packets (D, D1, D2) occurs during the course of use phases (ΔT_{N}) and lying between consecutive use phases (ΔT_{N}) are idle phases (ΔT_{L}), in which no data are transferred, and wherein in the case of a position request command (POS_RQ) occurring during an idle phase (ΔT_{N})?, after the idle phase (ΔT_{L}) has ended the position request command (POS_RQ) is transferred together with a first delay information message (DATA = 4; DATA = 9) to the position measurement device (10) and the first delay information message (DATA = 4; DATA = 9) can be evaluated by way of the position measurement device (10) such that a constant delay time (ΔT_{DEL}) always results between the occurrence of the position request command (POS_RQ) by way of the processing unit (20) and the processing of the position request command (POS_RQ) in the position measuring device (10).

2. Method according to claim 1, wherein in the case of a position request command (POS_RQ) occurring during a use phase (ΔT_{N}), in which data are transferred from the processing unit (20) to the position measuring device (10), the transfer of the current data packet (D, D1, D2) is ended and after the subsequent idle phase (ΔT_{L}) has ended, the position request command (POS_RQ) is transferred to the position measuring device (10).

3. Method according to claim 2, wherein together with the position request command (POS_RQ) a second delay information message (DATA = 0) is transferred to the position measuring device (10), and the second delay information message (DATA = 0) can be evaluated by way of the position measuring device (10) such that a constant delay time (ΔT_{DEL}) always results between the occurrence of the position request command (POS_RQ) by way of the processing unit (20) and the processing of the position request command (POS_RQ) in the position measuring device (10).

4. Method according to claim 3, wherein the second delay information message (DATA = 0) specifies a minimum delay time.

5. Method according to claim 1 or 3, wherein the delay information messages (DATA = 4, DATA = 9, DATA = 0) are respectively selected so that independently of the time point at which the position request command (POS_RQ) occurs, a constant delay time (ΔT_{DEL}) always results between the occurrence of the position request command (POS_RQ) by way of the processing unit (20) and the processing of the position request command (POS_RQ) in the position measuring device (10).

6. Method according to claim 1, wherein the idle phase (ΔT_{L}), during which the position request command (POS_RQ) occurs, is only ended after a predefined minimum duration, and idle data symbols (IDLE) are constantly transferred during the course of the idle phase (ΔT_{L}).

7. Method according to claim 1, wherein after processing of the position request command (POS_RQ) in the position measuring device (10), position data are transferred from the position measuring device (10) to the processing unit (20).

8. Method according to claim 2, wherein the complete transfer of the data packet (D1), the transfer of which was interrupted after the occurrence of the position request command (POS_RQ), is repeated after transfer of the position request command (POS_RQ) has been accomplished.

9. Method according to claim 1, wherein the data transfer between the position measuring device (10) and the processing unit (20) occurs on two data channels (31, 32) in full duplex mode.

10. Method according to claim 1 and 3, wherein the position request command (POS_RQ) is used to measure running time between the processing unit (20) and the position measuring device (10) in that the position request command (POS_RQ) is transferred from the processing unit (20) to the position measuring device (10) and is then transferred back from this again to the processing unit (20), and the elapsed time (Δt) from sending the position request command (POS_RQ) to receiving the position request command (POS_RQ) is applied to determine the signal running time (t_{L}) on this transfer - link.

11. Device based on ethernet physical layer assembly configured for performing a method according to at least one of the preceding claims.

## Revendications

1. Procédé de transfert en série de données entre un capteur de position (10) et une unité de traitement (20) **caractérisé en ce que** :
- la transmission de données sous la forme de paquets de données (D, D1, D2) a lieu au cours de phases utiles (ΔT_{N}) successives qui sont séparées par des phases à vide (ΔT_{L}) pendant lesquelles aucune donnée n'est transmise,
- dans le cas où une demande de position (POS_RQ) est lancée pendant une phase à vide (ΔT_{N}), à la fin de cette phase la demande (POS_RQ) est transmise au capteur de position (10) en même temps qu'une première information de retard (données = 4 ; données = 9),
- la première information de retard (données = 4 ; données = 9) peut être interprétée du côté du capteur de position (10) dans le sens que le résultat est toujours un temps de retard constant (ΔT_{DEL}) entre l'arrivée de la demande (POS_RQ) du côté de l'unité de traitement (20) et le traitement de la demande (POS_RFQ) dans le capteur (10).

2. Procédé selon la revendication 1, **caractérisé en ce que** quand a lieu une demande de position (POS_RQ) pendant une phase utile (ΔT_{N}) au cours de laquelle des données sont transmises de l'unité de traitement (20) au capteur de position (10), la transmission des paquets actuels de données (D, D1, D2) est achevée et à la fin de la phase à vide (ΔT_{L}) qui suit, la demande de position (POS_RQ) est transmise au capteur de position (10).

3. Procédé selon la revendication 2, **caractérisé en ce qu'**en même temps que la demande de position (POS_RQ) est transmise au capteur de position (10) une seconde information de retard (données = 0) qui peut être interprétée du côté du capteur de position (10), dans le sens que le résultat est toujours un temps de retard constant (ΔT_{DEL}) entre l'arrivée de la demande (POS_RQ) du côté de l'unité de traitement (20) et le traitement de la demande (POS_RFQ) dans le capteur (10).

4. Procédé selon la revendication 3, **caractérisé en ce que** la seconde information de retard (données = 0) donne un temps de retard minimal.

5. Procédé selon la revendication 1 ou 3, **caractérisé en ce que** les informations de retard (données = 4, données = 9, données = 0) sont choisies chacune de manière qu'indépendamment de l'instant où apparaît la demande du côté de l'unité de traitement (20), le résultat est toujours un temps de retard constant (ΔT_{DEL}) entre l'arrivée de la demande (POS_RQ) du côté de l'unité de traitement (20) et le traitement de la demande (POS_RFQ) dans le capteur (10).

6. Procédé selon la revendication 1, **caractérisé en ce que** la phase à vide (ΔT_{L}), pendant laquelle a lieu la demande de position (POS_RQ), s'achève seulement au bout d'une durée minimale prédéfinie et que pendant cette phase à vide (ΔT_{L}), des symboles de données à vide (IDLE) sont transmis en continu.

7. Procédé selon la revendication 1, **caractérisé en ce qu'**après traitement de la demande de position (POS_RQ) dans le capteur de position (10), des données de position sont transmises du capteur de position (10) à l'unité de traitement (20).

8. Procédé selon la revendication 2, **caractérisé en ce que** la transmission complète du paquet de données (D1) dont la transmission a été interrompue après l'arrivée de la demande de position (POS_RQ), est répétée une fois achevée la transmission de la demande (POS_RQ).

9. Procédé selon la revendication 1, **caractérisé en ce que** la transmission des données entre le capteur de position (10) et l'unité de traitement (20) s'effectue sur deux canaux de données (31, 32) fonctionnant totalement en duplex.

10. Procédé selon une des revendications 1 et 3, **caractérisé en ce que** la demande de position (POS_RQ) est utilisée pour mesurer le temps de parcours entre l'unité de traitement (20) et le capteur de position (10), la demande de position (POS_RQ) est transmise de l'unité de traitement (20) au capteur de position (10) qui la renvoie de l'unité de traitement (20) et le temps (Δt) séparant l'émission de la demande de position (POS_RQ) de sa réception est utilisé pour déterminer le temps de parcours du signal (t_{L}) sur ce parcours de transmission.

11. Dispositif à base d'ethemet, aménagé pour mettre en oeuvre un procédé selon au moins une des revendications précédentes.
